Europäisches Patentamt
European Patent Office
Office européen des brevets

(19) (11) Publication number: 0 303 523 A1

# EUROPEAN PATENT APPLICATION

(21) Application number: 88307566.5

(22) Date of filing: 15.08.88

(51) Int. Cl.4: C 07 C 69/675
A 61 K 47/00, A 61 K 31/23,
A 23 D 3/00, A 23 D 5/00,
A 23 L 1/308

(30) Priority: 13.08.87 US 85434

(43) Date of publication of application:
15.02.89 Bulletin 89/07

(84) Designated Contracting States:
AT BE CH DE ES FR GB GR IT LI LU NL SE

(71) Applicant: NABISCO BRANDS, INC.
100 DeForest Avenue
East Hanover New Jersey 07936 (US)

(72) Inventor: Klemann, Lawrence P.
196 Tanglewood Drive
Somerville New Jersey 08876 (US)

Finley, John W.
3 Old Stone Lane
Whippany New Jersey 07981 (US)

(74) Representative: Thomas, Roger Tamlyn et al
D. Young & Co. 10 Staple Inn
London WC1V 7RD (GB)

## (54) Low calorie fat mimetics comprising carboxy/carboxylate esters.

(57) Novel fat mimetic compositions are disclosed as reduced calorie components. These compositions comprise a carbon backbone substituted with $-CO_2R$ and/or $-CH_2CO_2R$ (carboxylate and/or methyl carboxylate) and with $-O_2C-R$ and/or $-CH_2O_2C-R$ (carboxy and/or methylcarboxy) functionalities. The preferred carboxy/carboxylate esters are partially, but not completely, broken down in the body. These compounds thus achieve reduced caloric value and reduced problems associated with non-metabolizable fat substitutes. The fat mimetic compounds are useful in all edible compositions.

EP 0 303 523 A1

## Description

### Low Calorie Fat Mimetics Comprising Carboxy/Carboxylate Esters

The present invention relates to edible fat mimetic materials, and especially to the new compounds having a desireable combination of properties and their use in edible compositions.

Obesity is perceived as a common problem in contemporary society. This condition is due, in many people, to a greater intake of calories than are expended. While genetic and behavioral factors play a major role, it is generally agreed that reasonable modifications of the caloric value of foods can be valuable in reaching a desirable equilibrium weight for an individual predisposed to obesity.

Many foods which provide gustatory satisfaction contain significant fat levels. This can be a problem for individuals drawn to these foods because fat has about twice the caloric density of protein and carbohydrates. It has, in fact, been estimated that fat contributes about 40% of the total calories in the diet. It has long been desired to reduce the available calories of dietary fat without decreasing the appeal or satiety expected of fatty foods. It has been reported that this would offer a convenient and practical method by which obesity could be controlled, ideally without requiring a dieter to restrict total food intake.

Unfortunately, none of the materials heretofore suggested as fat replacements has achieved all of the desirable attributes of natural triglyceride fats and oils. One approach to lower the caloric value of edible fat has been to decrease the amount of triglyceride that is absorbed in the human system since the usual edible triglyceride fats are almost completely absorbed (see *The Lipids*, Vol. II [1955], H.J. Deuel, Interscience Publishers, Inc., New York, pages 215-227). The absorbability of triglyceride fat could be decreased by altering either the alcohol or the fatty acid portion of the molecule. There have been some experiments that have demonstrated a decrease in absorbability with certain fatty acids; for example, erucic acid (H. J. Deuel, A.L.S. Cheng, and M. G. Morehouse, *Journal of Nutrition*, Vol. 35 [1948], page 295) and stearic acid if present as tristearin (F. H. Mattson, *Journal of Nutrition*, Vol. 69 [1959], page 338). Also, U.S. Patent 2,962,419, to Minich discloses that fatty acid esters which contain a neopentyl nucleus are not digested like normal fats and thus can be used as a fat substitutes in food compositions.

Several other patents disclose edible compounds which are not digested or absorbed to the same extent as natural triglycerides. In U.S. Patent 3,579,548, White discloses certain glycerol esters of certain branched carboxylic acids which are said to have these properties. And, in U.S. Patent 3,600,186, Mattson and Volpenhein disclose sugar and sugar alcohol fatty acid esters having at least four fatty acid ester groups. All of these compounds are said to possess physical properties similar to ordinary triglyceride fat, but to be absorbed less readily when eaten. It is, unfortunately, this very attribute which causes undesirable and potentially embarrassing side effects, including the frank anal discharge of the materials.

In a greater departure from conventional glyceride ester chemistry, Canadian Patent 1,106,681 to Trost discloses glycerol dialkyl ether compounds which are said to have functional properties similar to those of conventional fats, but which are not absorbed in the digestive tract to any significant degree. Also, Ward, Gros and Feuge have reported in "New Fat Products: Glyceride Esters of Adipic Acid", *JAOCS*, Vol. 36 [1959], page 667, that highly viscous oils formed by reacting two glycerol molecules with a diabasic acid, such as fumaric, succinic and adipic acids, and then reacting one of the hydroxyl groups of each glycerol moiety with a fatty acid, are useful in the food industry, primarily as lubricants and coatings.

In U.S. Patent 4,508,746, Hamm discloses a low-calorie substitute for at least a portion of the edible oil component in oil-based food compositions. It is comprised in substantial proportion of at least one low-calorie oil component selected from the group consisting of thermally stable polycarboxylic acids having 2 to 4 carboxylic acid groups esterified with saturated or unsaturated alcohols having straight or branched carbon chains of from 8 to 30 carbon atoms. See also D. J. Hamm; "Preparation and Evaluation of Trialkoxytricarballylate, Trialkoxycitrate, Trialkoxyglycerylether, Jojoba Oil, and Sucrose Polyester as Low Calories [sic] Replacements of Edible Fats and Oils"; *J. of Food Science*, Volume 49 [1984], pages 419-426.

In another attempt at simulating the natural properties of fat, Fulcher discloses certain diesters in U.S. Patent 4,582,927. These compounds have at least two carboxylate groups joined to a common carbon atom, with each of the carboxylate groups containing the residue of a 12 to 18 carbon alkyl, alkenyl or dienyl alcohol.

One of the main problems in attempting to formulate fat-like compounds that have decreased absorbability and thus low caloric properties is to maintain the desirable and conventional physical properties of edible fat. Thus, to be a practical low calorie fat, a compound must mimic conventional triglyceride fat by affording the same utility in various fat-containing food compositions such as shortening, margarine, cake mixes, and the like, and be useful in frying or baking. Unfortunately, none of the prior attempts has been successful to the degree that commercial products employing them have either been approved for safety or achieved general public acceptance in their featured role.

Among the problems with non-absorbable fat-like materials is the possibility that they will leach fat-soluble vitamins and minerals from the body and that they function, when used in larger amounts, as purgatives. Many attempts have been made to solve these and related problems; however, a better solution would employ chemistry more compatible with the human digestive process, while providing a significant decrease in caloric density *vis-a-vis* glyceride fats.

## SUMMARY OF THE INVENTION

The present invention provides a new class of fat mimetic compounds, new food compositions which contain them, and the process of employing these compounds in food compositions. The new fat mimetic materials are esters of at least one fatty alcohol and at least one fatty acid with hydroxycarboxylic acids.

The fat mimetic compounds have both carboxylate and carboxy groups extending from a backbone, are referred to herein as carboxy/carboxylate esters, and can be defined by the following formula:

$$(R' - \overset{O}{\overset{\|}{C}} - O)_m \quad [R] \quad (\overset{O}{\overset{\|}{C}} - O - R')_n$$

wherein R is an organic radical;
R′ is an aliphatic, ester or ether group having from 1 to 30 carbon atoms, the various R′ groups being the same or different; and
m and n are integers of at least 1, and the sum of m and n is at least 2.

The R group of the above formula is analogous to the glycerol residue which forms the backbone of natural fats. The total of m and n, i.e., the total number of carboxy and carboxylate groups appended to the backbone R, their placement on the backbone, the backbone structure, and the selection of various R′ groups, will be determined by the properties, both biological and physical, of the desired compound.

The organic radical suitable as the backbone R group in the above formula will be of composition, configuration and size effective, with the pendant R′ carboxy and carboxylate groups, to provide a compound having a perceptible fat-like character. The R group will be selected from substituted and unsubstitued aliphatic and carbocylic groups. There is no known limitation on the size of the R group or the ability to successfully substitute any of the carbons or hydrogens with sulfur, nitrogen or oxygen; however, the R group will typically contain 20 or fewer carbon atoms.

While there is no known upper limit to the values of m and n, as a practical matter of synthesis, the total will not usually exceed 25 and will more typically be less than 12. The choice of the ratio of m to n, as with the selection of suitable R and R′ groups and the positioning of the R′ groups on the R group backbone, will affect the biological as well as the physical properties of the compounds. Where, by virtue of any of these factors, more of the pendant groups are metabolized, the caloric value of the fat mimetic compound will increase. The most preferred compounds will contribute at least one third, typically from one half to ninety percent, less calories than conventional glyceride fats. One range of ratios of m to n may be from 1:10 to 3:1, more narrowly from 1:8 to 1:1.

The R′ groups are analogous to the aliphatic moieties of fatty acid residues of natural fat, and can be selected from among any of the aliphatic groups, ester groups or ether groups effective to form fat mimetic materials. Representative aliphatic groups are residues of fatty acids or fatty alchols. Ether groups will typically be of the $-R'' - O - R'''$ structure wherein R″ and R‴ are aliphatic groups. Ester groups will typically be of the $-R'' - \overset{O}{\overset{\|}{C}} - OR'''$ structure, with R″ and R‴ as above.

The compounds are employed in any edible material or any food preparation process where a fat or oil (i.e., triglyceride fat) is normally employed, in total or partial replacement.

By judicious selection of the structural type, molecular size and the number of hydrocarbyl residues, it is possible to achieve a target reduction in calories while preferably achieving the maximum advantage from the combination of the properties of these mimetics.

## DETAILED DESCRIPTION

The following description relates to a new class of fat mimetic compounds and their incorporation into any food composition or use in conjunction with any edible material. The term "edible material" is broad and includes anything edible, whether or not intended for nutrition, e.g., it can be an additive such as an antioxidant for fats or oils, an antispatter agent, an emulsifier, a texture modifier such as a plasticizer for chewing gum, or other minor functional ingredient such as a carrier or diluent for use in flavorings, pharmaceuticals, and the like. Thus, chewing gum, flavored coatings, oils and fats intended only for frying, and the like are included. In these, all or a portion of the usual fat is replaced by a compound of the invention.

Representative of edible materials which can contain the fat mimetic compounds of the invention in full or partial replacement of natural fat are: frozen deserts, e.g., sherbet, ice cream, ices, or milk shakes; puddings and pie fillings; margarine substitutes or blends; flavored bread or biscuit spreads; mayonnaise; salad

dressing, both emulsified and non-emulsified; filled dairy products such as filled cream or filled milk; dairy or non-dairy cheese spreads; coffee lighteners, liquid and dried; flavored dips; frying fats and oils; reformed and comminuted meats; meat substitutes or extenders; whipped toppings; compound coatings; frostings and fillings; cocoa butter replacements or blends; candy, especially fatty candies such as containing peanut butter or chocolate; chewing gum; bakery products, e.g., cakes, breads, rolls, pastries, cookies, biscuits, savory crackers; mixes or ingredient premixes for any of these; as well as flavor, nutrient, drug or functional additive delivery systems.

The carboxy/carboxylate esters can be employed in margarine substitutes which can be either soft or hard. Margarines are generally sold as one of two principal types, namely, print, hard or stick margarine and soft or tub margarine. Both of these products contain liquid and hard stock components. It is an advantage of the present invention that, by eliminating some or all of the hard stock of conventional margarines, higher ratios of polyunsaturated to saturated fatty acids and lesser amounts of trans isomers can be achieved in high quality margarine products.

The fat mimetic compounds of the invention will be referred to as "carboxy/carboxylate esters". The carboxy/carboxylate esters of the present invention have not only the carboxy ester groups of conventional fats, but also have carboxylate ester groups as can be seen from the following formula:

$$(R' - \overset{\overset{O}{\|}}{C} - O)_m \quad [R] \quad (\overset{\overset{O}{\|}}{C} - O - R')_n$$

wherein R is an organic radical;
R′ is an aliphatic, ester or ether group having from 1 to 30 carbon atoms, the various R′ groups being the same or different; and
m and n are integers of at least 1, and the sum of m and n is at least 2.

The R group of the above formula is analogous to the glycerol residue which forms the backbone of natural fats. The organic radical suitable as the backbone R group in the above formula will be of composition, configuration and size effective, with the pendant R′ carboxy and carboxylate groups, to provide a compound having a perceptible fat-like character. The R group will be selected from substituted and unsubstitued aliphatic and carbocylic groups, typically containing 20 carbon atoms or less. There is no known limitation on the size of the R group or the ability to successfully substitute any of the carbons or hydrogens with sulfur, nitrogen or oxygen. In fact, derivatives of sugar molecules such as sucrose, fructose, glucose, maltose, and the like, which contain oxygen within ring structures will function as backbone materials, it being, of course, necessary to append carboxyl groups for reaction with fatty acids, or otherwise form one or more carboxylate groups as shown in the above formula.

The total of m and n, i.e., the total number of carboxy and carboxylate groups appended to the backbone R, their placement on the backbone, the backbone structure, and the selection of various R′ groups, will be determined by the properties, both biological and physical, of the desired compound.

While there is no known upper limit to the values of m and n, as a practical matter of synthesis, the total will not usually exceed 25, and more typically will be less than 12, for example from 2 to 8. The choice of the ratio of m to n, as with the selection of suitable R and R′ groups and the positioning of the R′ groups on the R group backbone, will affect the biological as well as the physical properties of the compounds. Where, by virtue of any of these factors, more of the pendant groups are metabolized, the caloric value of the fat mimetic compound will increase. The most preferred compounds will contribute at least one third, typically from one half to ninety percent, less calories than conventional glyceride fats. One range of ratios of m to n may be from 1:10 to 3:1, more narrowly from 1:8 to 1:1.

The R′ groups are analogous to fatty acid residues of natural fat in that they are attached to a backbone for the molecule. These R′ groups are selected from among any of the aliphatic groups, ester groups or ether groups effective to form fat mimetic materials. Representative aliphatic groups are residues of fatty acids or fatty alchols, for example of the structures appearing in natural fats. The present invention can, however, employ acid and alcohol residues not appearing in natural fats. The aliphatic groups can be straight or branched, saturated or unsaturated. In addition, mixtures of fatty acids derived by the hydrolysis of natural fats can also be employed. Ether groups will typically be of the $-R'' - O - R'''$ structure wherein R″ and R‴ are aliphatic groups, typically from 1 to 15, more narrowly 2 to 10, carbons. Ester groups will typically be of the

$$- R'' - \overset{\overset{O}{\|}}{C} - OR'''$$

structure, with R″ and R‴ as above.

The "backbone" of the carboxy/carboxylate esters of the present invention serves as a point of attachment for pendant ester residues. The pendant ester residues themselves are comprised of either carboxy or carboxylate functionalities, the carboxy functionalities being analogous to those ester residues found in natural triglycerides (having ester oxygen covalently bonded to the backbone) while the carboxylate functionalities have a configuration which is exactly reversed (having carboxylate carbon covalently bonded to the backbone).

The simultaneous presence of both carboxy and carboxylate functionalities as pendant residues on a definable backbone offers a clear distinction over prior art structures which have been disclosed as potential low calorie oil and fat replacements. The present novel structures containing both carboxy and carboxylate functionalities offer several distinct advantages over many of the prior art materials which have been claimed as fat and oil analogs.

In the preferred compounds, the pendant carboxy and carboxylate residues attached to a carbon backbone offer differential reactivity with respect to cleavage by digestive enzymes. This results not only in the controlled and limited availability of effective caloric value, but also the selective conversion of the fat mimetic to a product or intermediate with a less oil-like nature. The more readily digestible carboxylic acid residue (i.e., the carboxy function) can be a highly-desirable essential acid or a nutritionally advantageous carboxylic acid such as: oleic, linoleic, linolenic, or eicosapentaenoic acids, as well as low molecular weight carboxylic acids (e.g., acetic, propionic, butyric acids) which would limit caloric delivery and provide additional ability to control functionality. The product of such a controlled digestive process may be said to have decreased hydrophobicity, and correspondingly increased hydrophilicity, relative to its fat mimetic precursor. Such a product of a process of controlled digestion would tend to have not only decreased oilyness, but also increased ability to function as an emulsifier. Such a controlled digestion product will be less prone to exist in the GI tract as a persistent oil compared with substances taught in the prior art. Ideally, the enhanced emulsifying capacity of the enzymatic cleavage product derived from compositions of the invention would actually be an aid to digestion, substantially overcoming a major problem which has heretofor limited the widespread use and development of highly desirable low calorie synthetic fats and oils in foods and food preparation.

During the synthetic process which leads to these new compositions, carboxylic acid and aliphatic alcohol moieties may be introduced sequentially to afford an array of structures with well defined functional and isomeric characteristics. This logical molecular assembly process also allows for the use of natural or synthetic blends of such carboxylic acids and aliphatic alcohols, as well as carboxylic acids and aliphatic alcohols which contain substantial levels of chain branching.

Another advantage offered within the scope of the present invention is the ability to enable the construction of novel molecules and fat mimetics whose molecular weights, and melting ranges, and viscosity properties may be engineered at the molecular level so as to fall within the same desirable ranges found for natural fats and oils, so as to closely emulate the properties and the functionality of natural fats and oils used in food products.

Where the backbone R is linear, the following formula represents one group of carboxy/carboxylate esters:

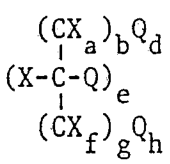

where:
C = a carbon atom;
X = H, OH, substituted or unsubstituted or lower aliphatic (e.g., $C_1$-$C_4$), the various X groups being the same or different;
Q =
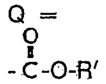 (carboxylate),
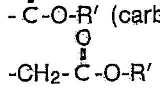 (methylcarboxylate),
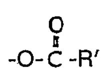 (carboxy), or
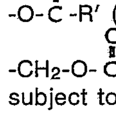 (methylcarboxy) radicals,
subject to the proviso that each molecule contain at least one carboxy or methylcarboxy and at least one carboxylate or methyl carboxylate radical;
R′ = Substituted or unsubstituted organic group defined by the following formula

```
  Z
  |
-C-T
  |
  H
```

the various R′ groups being the same or different;

T = Hydrogen or a substituted or unsubstituted aliphatic group, e.g., no greater than 22 carbons, containing 0 to 5 unsaturated linkages (e.g., C=C double bonds, C≡C triple bonds) per T residue;

Z = A bridging bonding valence (e.g., a bond to carbon), hydrogen, or a residue of an alcohol, a glycol ester of the formula

```
     O
     ‖
-O- C -CH2-T, or
```

an ether;

with the proviso that there is only one bridging bonding valence per R′ group;

and where:

a = 0 to 3, preferably 0 to 2;

b = 0 to 4, preferably 0 to 1;

d = 1 or 2;

e = 0 to 5, preferably 1 to 2;

f = 0 to 3, preferably 0 to 2;

g = 0 to 4, preferably 0 to 1;

h = 1 or 2.

Preferably, from 2 to 5 Q radicals comprise alkyl, alkenyl, alkyldienyl, alkyltrienyl, or alkynyl radicals having at least 5, preferably from 8 to 22, carbons.

Typically, fatty alcohols having saturated or unsaturated aliphatic groups with at least 5 carbons will be employed. Preferred fatty alcohols are oleyl, linoleyl, linolenyl, stearyl, palmityl, myristyl, lauryl, capryl, eicosapentaenyl, and the like. The preferred fatty acids are of similar chain lengths and configurations.

Preferred linear backbone compounds will be based on methane, ethane, propane, butane, and pentane carboxylic acids having at least two carboxylic acid groups and at least one hydroxyl group. The number of carboxylic acid groups will desireably not exceed the number of carbons in the backbone by more than 1, and the number of hydroxyl groups will desirably not be greater than the number of carboxylic acid groups. In some cases it is preferred that the ratio of hydroxyl groups to carboxylic acid groups be less than 1:2.

The particular types of fatty acids and alcohols can be selected to achieve the desired texture (both solid and liquid) and melt characteristics in the compound. Blends of carboxy/carboxylate esters with each other and/or with natural fats and oils and/or other fat mimetic materials such as sucrose polyesters can be selected for a desired melt profile and mouthfeel. This is especially desirable in the case of margarine substitutes, as will be described in greater detail below.

Among the carboxy/carboxylate esters preferred for many applications are those with melting points below about 98°F because these materials melt completely in the mouth providing the organoleptic sensation of natural fats and oils. For some products, relatively sharp melting points, say in the range of from about 90° to 98°F, are desired because they provide a cooling sensation and a meltdown equivalent to high quality, solid natural fats.

The following is a list of representative, but non-limiting, examples of carboxy/carboxylate esters:

(1) Didecyl Stearoyloxy-Methanedicarboxylate

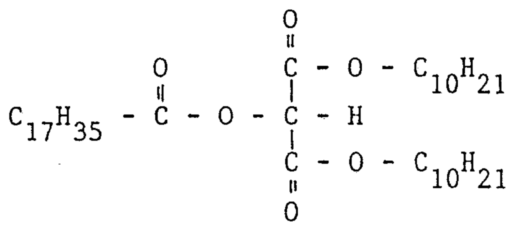

(2) Didecyl 2-Stearoyloxy-1,1-Ethanedicarboxylate

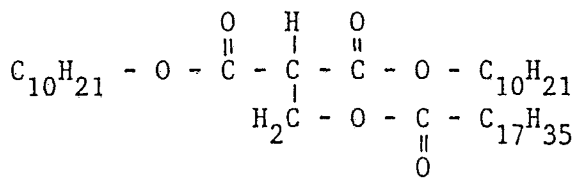

(3) 1-Decyl-2-Stearyl 1-Octanoyloxyethanedicarboxylate

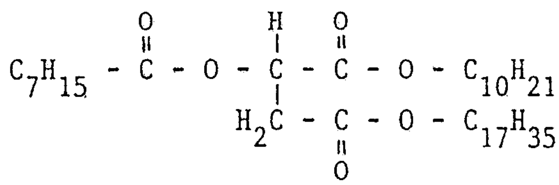

(4) 1-Stearyl-2,2-Didodecyl 1-Hexanoyloxyethanetricarboxylate

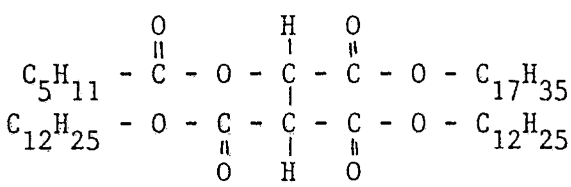

(5) Dioleyl 2-Myristoyloxy-1,3-Propanedicarboxylate

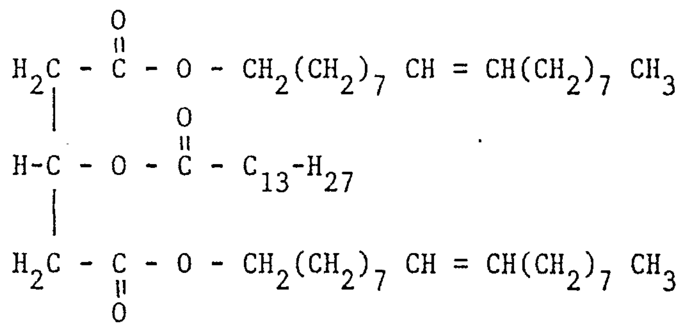

(6) Dioleyl 3-Heptadecanoyloxy-1,2-Propanedicarboxylate

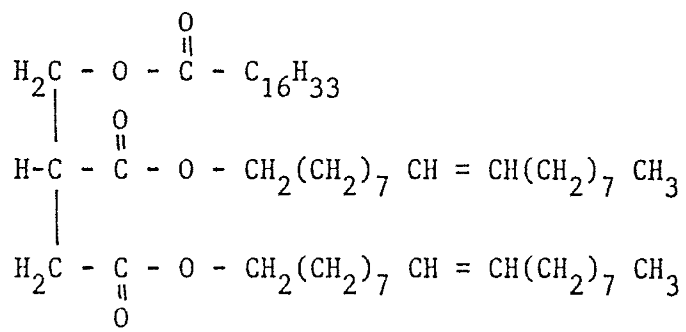

(7) Dipalmityl 4-Oleoyloxy-1,3-Butanedicarboxylate

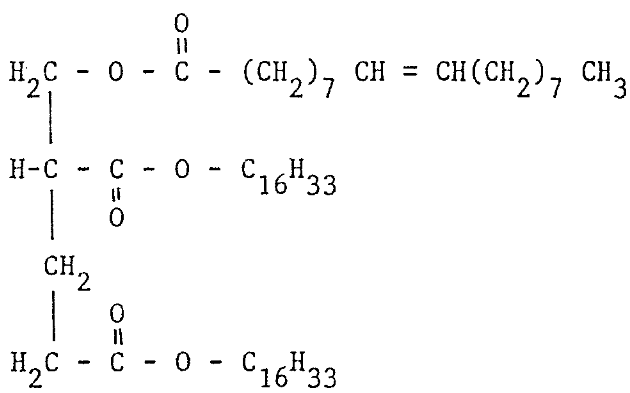

(8) Dimyristyl 2-Palmitoyloxy-1,4-Butanedicarboxylate

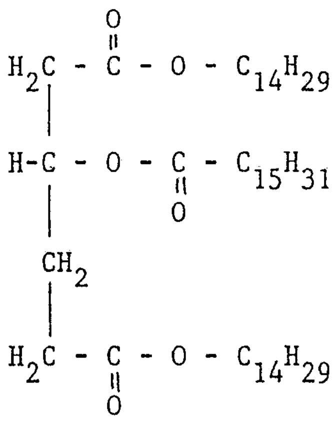

(9) 1-Dodecyl-2-stearyl 4-Myristoyloxy-1,2-Butanedicarboxylate

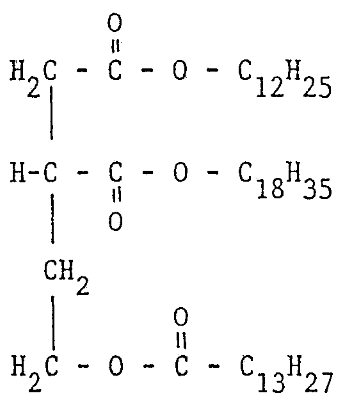

(10) Trioleyl 4,5-Distearoyloxy-1,2,3-Pentanetricarboxylate

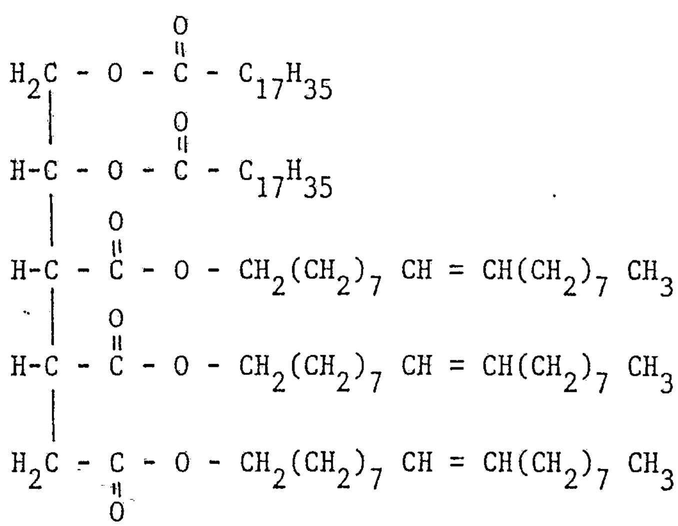

(11) Tristearyl 5-Octanoyloxy-4-methyl-4-Hydroxy-1,2,3-Pentanetricarboxylate

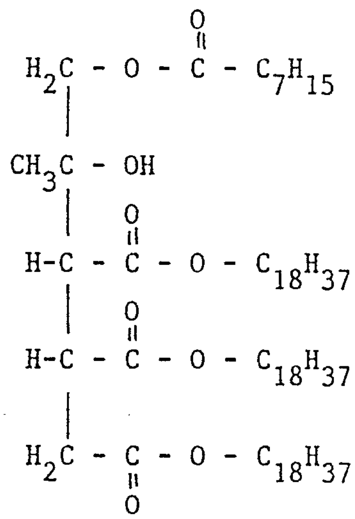

(12) Tetrastearyl 3-Oleoyloxy-1,2,4,5-Pentanetetracarboxylate

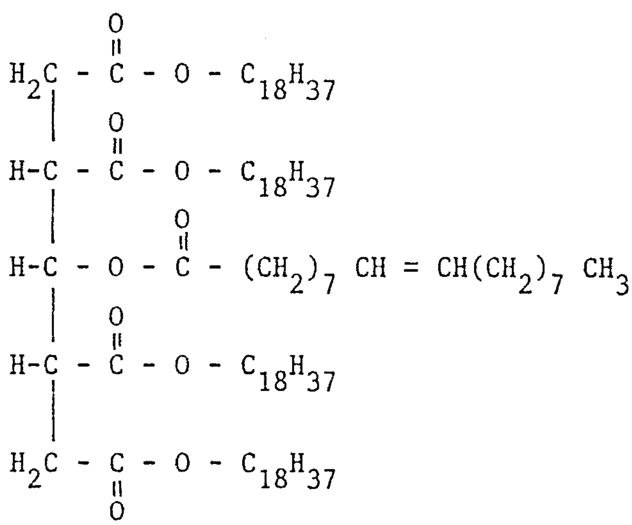

(13) Tetraoleyl 5-Octanoyloxy-1,2,3,4-Pentanetetracarboxylate

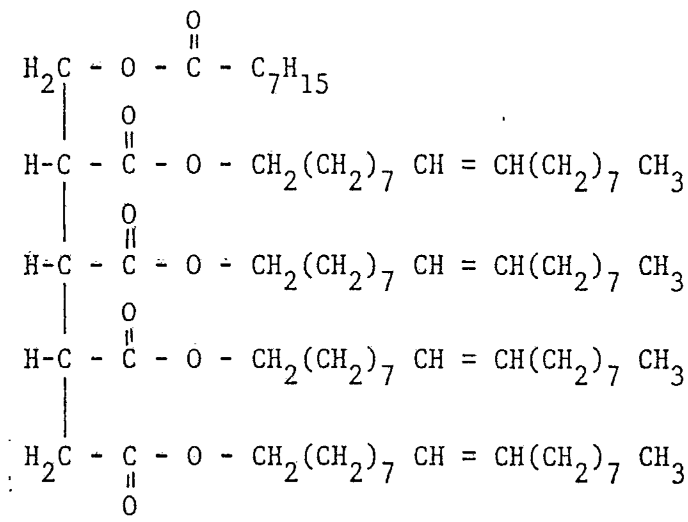

(14) Tetrastearyl 2-Oleoyloxy-1,3,4,5-Pentanetetracarboxylate

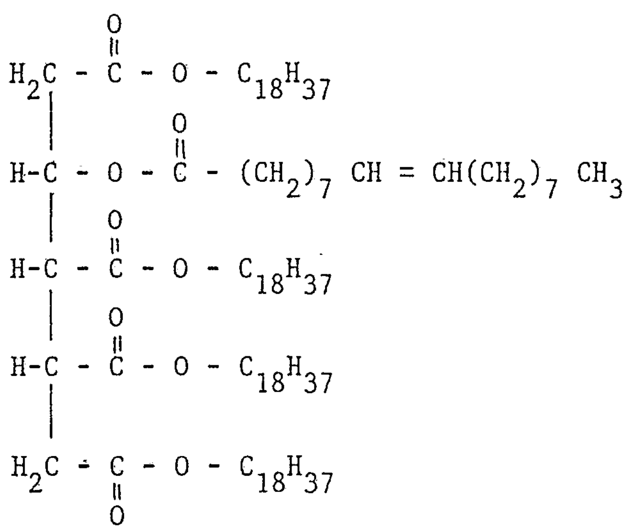

(15) Dioleyl 2,4-di(Methylpalmitoyloxy)-3-(2,2-Dimethylpropanoyloxy)-1,5-Dimyristoyloxypentane-2,4-Dicarboxylate

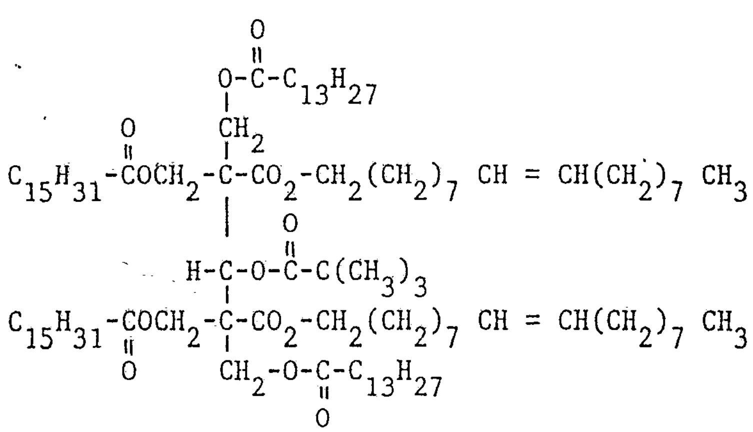

(16) Didecyl 2-(2,2-Dimethylpropanoyloxy)-1,3-Propanedicarboxylate

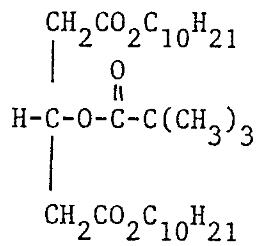

(17) Dioleyl 2-Oleoyloxy-1,3-Propanedicarboxylate

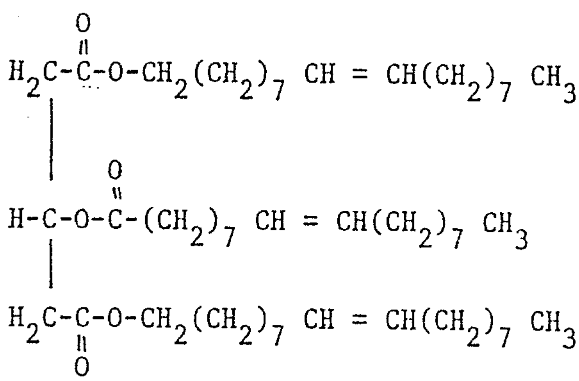

(18) Dioleyl 1-Myristoyloxy-1,3-Propanedicarboxylate

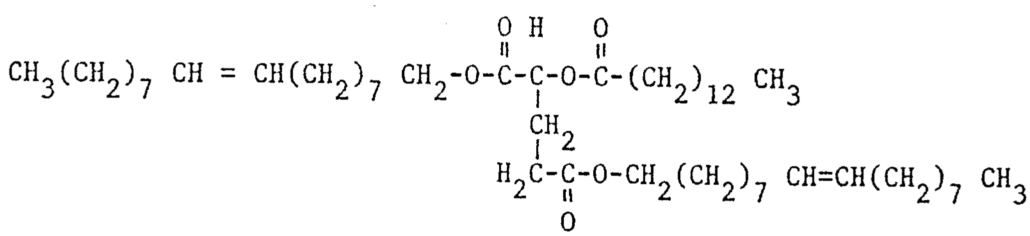

(19) Dioleyl 1-Oleoyloxy-1,3-Propanedicarboxylate

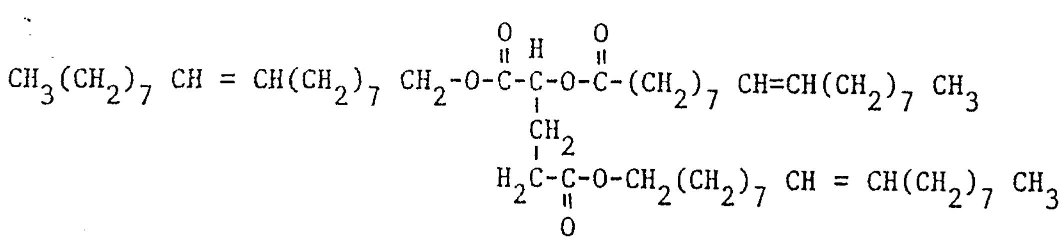

(20) Dioleyl 3-Oleoyloxy-1,5-Pentanetricarboxylate

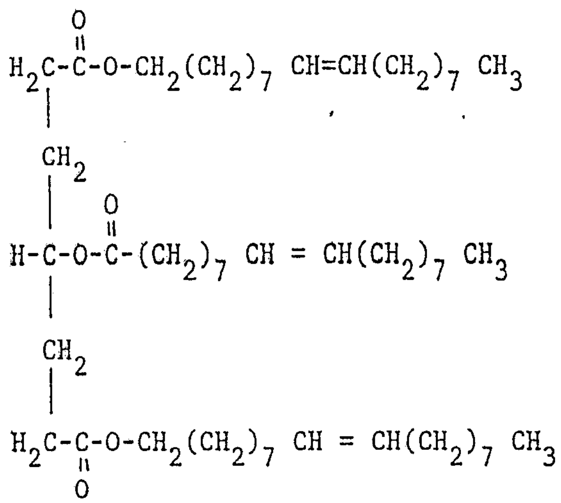

(21) Dioleyl 2-Myristoyloxy-1,2-Ethanedicarboxylate

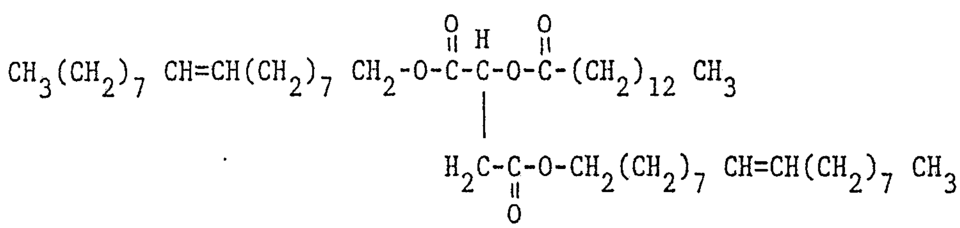

(22) Dioleyl 2-Oleoyloxy-1,2-Ethanedicarboxylate

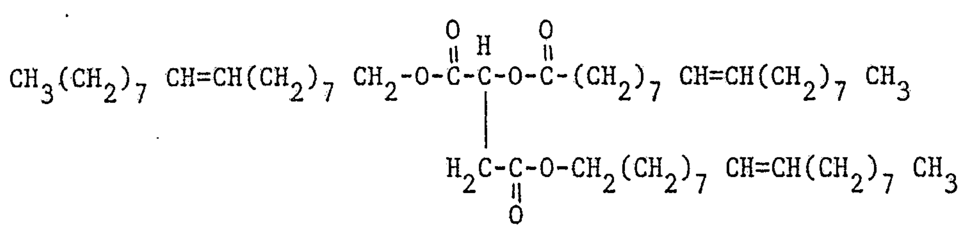

(23) Didecyl 2-Palmitoyloxy-1,2-Ethanedicarboxylate

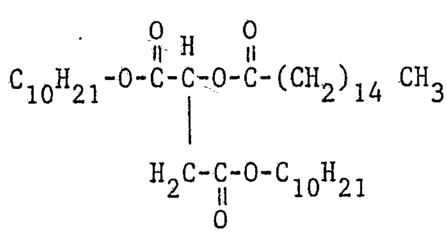

(24) Myristyl 1,2-Hexadecyloyloxy:Oleoyloxy-1-Ethanecarboxylate

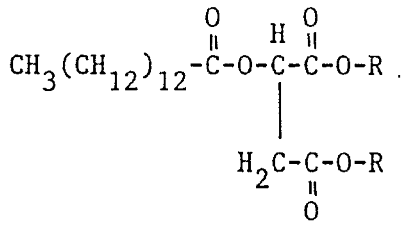

where R is a 50:50 mixture of $-(CH_2)_{15}\ CH_3$ and $-(CH_2)_8\ CH=CH(CH_2)_7\ CH_3$

(25) Didodecyl 2-Myristoyloxy-1,2-Ethanedicarboxylate

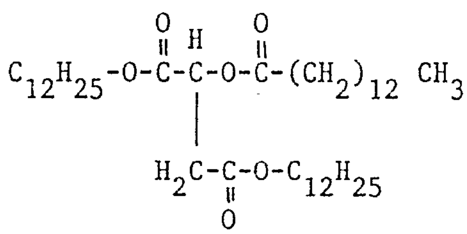

(26) Dioleyl 1,3-Di(Oleoyloxy)-2,2-Propanedicarboxylate

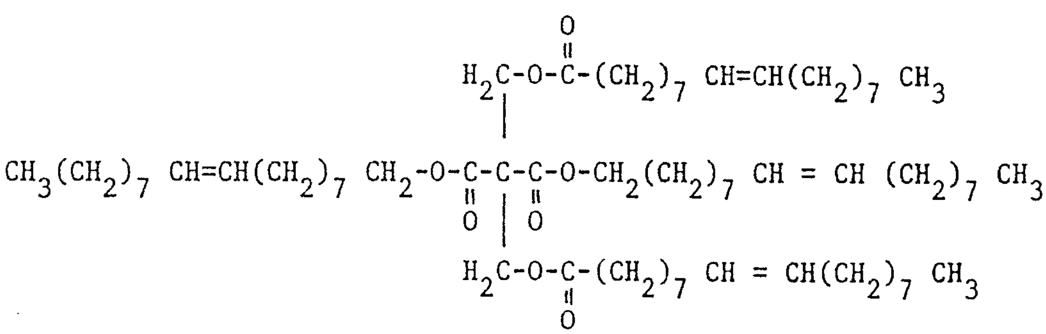

(27) Oleyl 1,3-Oleoyloxy-2-Methylpropane-2-Carboxylate

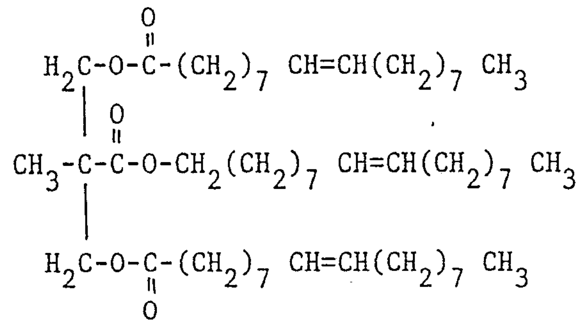

(28)

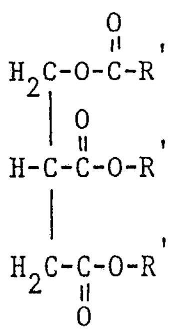

where R' is as defined above.

(29)

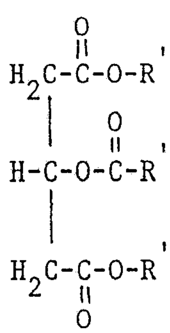

where R' is as defined above.

(30)

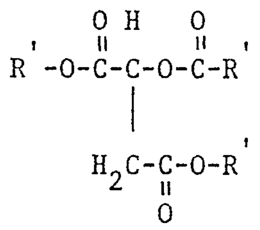

where R' is as defined above.

The carboxy/carboxylate esters which are most preferred as food additives are those which, upon the action of digestive enzymes in the body, yield residues which include fatty acids which may be normally metabolized and a further carboxylate residue which has a hydrophile/lipophile balance (HLB) effective to moderate the oily characteristic of the residue, and thereby moderate GI tract insult. These carboxylate residues are in themselves novel compounds.

The following examples are presented to further illustrate and explain the present invention and should not be taken as limiting in any regard. Unless otherwise indicated, all parts and percentages are by weight.

## EXAMPLE 1

This example shows the preparation, from intermediates to final molecular composition, of a fat mimetic material of the invention.

Didecyl 1,3-acetonedicarboxylate.

Trichloroacetic acid (0.82 g, 0.005 mole), decyl alcohol (33.56 g, 0.212 mole, about 5 mole% excess), and dimethyl 1,3-acetone dicarboxylate (17.42g, 0.100 mole) are combined in a 250-mL single neck flask containing a magnetic stir bar and sealed with a vacuum stopcock. The two phase mixture of liquids is stirred vigorously under vacuum (about 150 mm Hg) while being heated for three hours to 130 to 140 degrees C by means of an oil bath. At the end of this period, a weight loss of 6.37 g (theory 6.41 g) is noted. The yield (about 44.6 g) of homogeneous, colorless liquid is essentially quantitative. This product is characterized by proton nmr spectroscopy in chloroform-d: (chemical shift, intensity, multiplicity, assignment): (4.31ppm, 4H, triplet, $-OCH_2$); (3.61ppm, 4H, singlet, $O=C-CH_2-CO_2$); (1.64ppm, 4H, multiplet, alcohol $-CH_2-$); (1.27ppm, 28H, multiplet, alcohol $-CH_2-$); (0.88ppm, 6H, triplet, $-CH_3$).

Didecyl propane-2-ol-1,3-dicarboxylate.

Sodium borohydride (4.36 g, about 115 mmole), 100 mL ice-water (about 5 degrees C), didecyl 1,3-acetone dicarboxylate (17.18 g, 40.3 mmole), and 50 mL pentane are combined in a 500-mL flask containing a magnetic stir bar, thermometer, and gas exit connection. The two phase mixture was stirred vigorously at ambient temperature for 3 hours. The upper phase is then separated, washed with 100 mL of distilled water, and dried over anhydrous MgSO4. After vacuum filtration, the pentane solution is concentrated on a vacuum rotary evaporator to give 15.2 g. of straw colored oil (about 88% yield, mole basis). Proton nmr (in chloroform-d) is consistent with the title compound: (ppm, intensity, multiplicity, assignment); (4.44 ppm, 1H, quintet of doublets, methine H); (4.09 ppm, 4H, triplet, $O-CH_2$); (3.49 ppm, doublet, J=4.3 Hz, 1H, -OH); (2.54 ppm, 4H, doublet, J=6.3 Hz, $O=C-CH_2-CO_2$); 1.62 ppm, 4H, multiplet, alcohol $-CH_2-$); (1.25 ppm, 28H, multiplet, alcohol $-CH_2-$); and (0.87 ppm, 6H, triplet, $-CH_3$). A homonuclear COSY experiment confirms the $A_2MX$ spin system associated with the -OH site; the product contained a residual amount of unreacted decyl alcohol.

Didecyl 2-(2,2-dimethylpropanoyloxy)-1,3-propanedicarboxylate.

The above product (4.28 g, 0.01 mole) and trimethylacetyl chloride (0.012 mole) are combined in 25 mL tetrahydrofuran, and over 5 minutes a solution of triethylamine (1.09 g, 0.011 mole) in 20 mL tetrahydrofuran is added dropwise with stirring. After stirring overnight, 1.0 g of white solid is recovered by filtration (theory for triethylammonium chloride is 1.38 g). The filtrate is evaporated and the residue dissolved in 50 mL pentane.

This solution is washed with 100 mL aqueous sodium carbonate and then dried over anhydrous magnesium sulfate. Filtration and evaporation of the pentane affords 4.18 g of pale yellow oil (theory is 5.1 g). The nmr spectrum of the product in chloroform-d shows the dissappearance of the -OH proton and a new methine proton quintet at 4.52 ppm, consistent with the introduction of the carboxy function noted in the title structure.

This product exhibits the oily feel of vegetable oil.

## EXAMPLE 2

Another fat mimetic (dioleyl 2-myristoyloxypropane-1,3-dicarboxylate) is prepared by first preparing dioleyl 1,3-acetonedicarboxylate.

Trichloroacetic acid (9.8 g, 0.06 mole), dimethyl 1,3-acetonedicarboxylate (139.3 g, 0.80 mole), and oleyl alcohol (451.1 g, 1.68 mole) are combined in a 2000 mL flask fitted with a distillation head, thermometer, and Teflon coated stirrer bar. The system is evacuated to about 150 mm Hg and was heated at 130-40 degrees C for 17 hours. A quantitative yield of clear orange oil was obtained. A proton NMR spectrum in chloroform-d is consistent with the proposed structure: (chemical shift, intensity, assignment): (5.35 ppm, 4H, =C-H); (4.13 ppm, 4H, O-$CH_2$-); (3.61 ppm, 4H, O=C-$CH_2$-$CO_2$); (2.01, 1.62 and 1.27 ppm, 56H, C-$CH_2$-C); and (0.88 ppm, 6H, -$CH_3$).

This product is then reacted to form dioleyl propane-2-ol-1,3-dicarboxylate. Sodium borohydride (11.23 g, 0.3 mole), 400 mL ice water, dioleyl 1,3-acetonedicarboxylate (97.06g, about 0.15 mole), and 200 mL pentane are combined in a 1000 mL flask fitted with a magnetic stirrer bar and a thermometer. The mixture is stirred vigorously for about 7 hours whereupon saturated NaCl solution and additional pentane are added, and the isolated organic layer is washed successively with 5% HCl and distilled water. The pentane solution is dried over anhydrous $MgSO_4$, filtered and evaporated to give 83.9 g (86 mole% yield) of clear straw colored oil whose proton NMR spectrum in chloroform-d supports the proposed structure: (chemical shift, intensity, assignment); (5.35 ppm, 4H, =C-H); (4.46 ppm, 1H, methine proton); (4.10 ppm, 4H, O-$CH_2$-); (3.45 ppm, 1H, -OH); (2.55 ppm, 4H, O=C-$CH_2$-$CO_2$); (2.00, 1.63 and 1.26 ppm, 56H, C-$CH_2$-C); and (0.88 ppm, 6H, -$CH_3$). The product contained about 8% unreduced dioleyl 1,3-acetonedicarboxylate.

This intermediate product is then reacted to form dioleyl 2-myristoyloxypropane-1,3-dicarboxylate. Dioleyl propane-2-ol-1,3-dicarboxylate (6.49 g, about 0.01 mole) and myristoyl chloride (2.92 g, about 0.012 mole) are heated at 110 degrees C for 22 hours under about 200 mm Hg vacuum. Proton NMR analysis of the clear orange oily product (8.81 g) is consistent with greater than 95%, molar basis, conversion to the title structure: (chemical shift, intensity, assignment): (5.51 ppm, 1H, methine proton); (5.35 ppm, 4H, =C-H); (4.07 ppm, 4H, O-$CH_2$-); (2.70 ppm, 4H, O=C-$CH_2$-$CO_2$); (2.27, 2.01, 1.61 and 1.27 ppm, 80H, C-$CH_2$-C); and (0.88 ppm, 9H, -$CH_3$).

This material is an oily liquid similar to vegetable oil.

## EXAMPLE 3

This example demonstrates that the fat mimetic of Example 2 can undergo selective enzyme hydrolysis within a living mammalian digestive system to provide a more hydrophilic cleavage product which independently exhibits emulsifying properties.

Rat feces were collected two days after gavage introduction of dioleyl 2-myristoyloxy-1,3-propanedicarboxylate at a level of 10 milligrams per kilogram of animal body weight. The collected fecal sample was freeze dried and stored in a capped vial. A 1.0 gram sample of freeze dried fecal material was mechanically ground and subsequently stirred for one hour with 10 mL of a 2:1 (v/v) blend of chloroform:methanol. The filtered extract was washed with an equal volume of water and was evaporated in a stream of nitrogen. The residue was dissolved in a minimum amount of diethyl ether, and the resulting solution was spotted on a 20 x 20 centimeter silica prep thin layer chromatography plate. The TLC chromatogram was developed with a 40:60:1 (v/v/v) mixture of hexane-ether-acetic acid. After drying, the TLC plate was placed briefly in a chamber containing iodine vapor. This procedure permitted visualization of the developed bands. A band of silica approximately one centimeter in width and centered at an Rf of 0.78 was removed. The recovered silica was extracted with diethyl ether and the extract was filtered through paper. Removal of solvent by evaporation gave an oily yellow residue. This residue was dissolved in chloroform-3 and was examined by proton NMR spectroscopy using a 300 MHz instrument. Fourier transform analysis of 64 transients provided a spectrum which was consistent with a 62:38 mole/mole mixture of digestive hydrolysis product (dioleyl 2-hydroxy-1,3-Propanedicarboxylate) and unchanged oil (dioleyl 2-myristoyloxy-1,3-Propanedicarboxylate).

## EXAMPLE 4

This example describes preparation of dioleyl 1-oleoyloxy-1,2-ethanedicarboxylate, another fat mimetic of the invention.

Dioleyl 1-hydroxy-1,2-ethanedicarboxylate
Trichloracetic acid catalyst (6.53 g, 0.04 mole), 458.0 g (1.70 mole) technical grade oleyl alcohol containing 70% monounsaturated C18, and 134.2 g (1.0 mole) 2-hydroxysuccinic acid are combined in a 2000 mL, two neck flask containing a magnetic stirrer bar and fitted with a distillation head and vacuum adapter and receiver. The apparatus is placed under 150 mm Hg vacuum, and heating and stirring is begun. When the slurry reaches 110 degrees C, an exothermic reaction is observed, water distills and the diacid dissolves to give a clear, pale yellow solution. After 30 minutes the temperature is raised to 140 degrees C and heating is continued for 17 hours. The reaction mixture is allowed to cool to ambient temperature and is passed through a falling film still (168 degrees C, 1.4 mm Hg). The yield of pale yellow oil is 514.6 g, (95%). Proton nmr in chloroform-d: chemical shift in ppm (multiplicity, intensity, assignment): 5.36 (multiplet, 4 H, HC=CH), 4.44 (doublet of doublets, J=6.0 and 4.8, 1 H, methine proton), 4.20 (overlapping triplets, 2 H, O-CH2-), 4.11 (triplet, 2 H, O-CH2-), 3.30 - 2.75 (very broad unresolved peak, 1 H, -OH), 2.81 (doublet of doublets, J=16.3 and 4.9, 1 H, one half of -CH2-CO2-), 2.73 (doublet of doublets, J=1.63 and 6.0, 1 H, one half of -CH2-CO2-), 2.02 (multiplet, 8 H, C=C-CH2-), 1,65 (multiplet, 4 H, O-C-CH2-), 1.32 (multiplet, 44 H, -CH2-) and 0.89 (triplet, 6 H, -CH3), the hydroxy proton does not give rise to a distinguishable, sharp resonance. Carbon nmr: 173.5 and 170.8 (C=O), 130.0 and 129.8 (C=C), 67.3, 66.1 and 63.1, 39.0, 10 peaks between 21.8 - 33.0 (-CH2-), and 14.3 (-CH3).

Dioleyl 1-oleoyloxy-1,2-ethanedicarboxylate.
4-Dimethylaminopyridine (1.29 g, 0.01 mole), 43.85 g (0.21 mole) N,N'-dicyclohexylcarbodiimide and 400 mL methylene chloride are combined in a 1000 mL flask containing a magnetic stirrer bar. To this solution is added 56.49 g (0.20 mole) oleic acid and 127.00 g (0.20 mole) dioleyl 2-hydroxysuccinate in 100 mL methylene chloride. A precipitate begins to form immediately, and stirring at room temperature is continued for 21 hours. By-product N,N'-dicyclohexylurea is recovered by vacuum filtration and the filtrate is evaporated and dissolved in 400 mL diethyl ether and washed with 5 % HCl (4 x 250 mL). After drying over magnesium sulfate and filtration, the ether is evaporated to give 163.0 g of pale crude product. This is dissolved in an equal volume of hexane and chromatographed on 265 g silica. Evaporation of the hexane eluate yields a colorless oil. Proton nmr in chloroform-d: 5.47 (triplet J=6.2 Hz, 1 H, methine), 5.35 (multiplet, 6 H, HC=CH), 4.15, 4.14 and 4.12 (overlapping triplets, 4 H, O-CH2), 2.87 (doublet J=6.2 Hz, 2 H, O-C-CH2-C=O), 2.37 and 2.38 (overlapping triplets, 2 H, O=C-CH2), 2.02, 1.64 and 1.30 (multiplets, 82 H, -CH2-) and 0.89 (triplet, 9 H, -CH3) Analysis: Calc. for $C_{58}H_{106}O_6$, FW 899.47: C 77.45, H 11.88, O 10.67%; Found: C 77.22, H 12.01, O (by difference) 10.77%.

## EXAMPLE 5

This example describes the synthesis of dioleyl-2-myristoyloxy-1,2-ethanedicarboxylate, another fat mimetic of the invention.

Dioleyl 1-myristoyloxy-1,2-ethanedicarboxylate
4-Dimethylaminopyridine (1.83 g, 0.015 mole), 68.1 g (0.33 mole) N,N'-dicyclohexylcarbodiimide and 300 mL methylene chloride are combined in a 2000 mL flask containing a magnetic stirrer bar. A slurry of 68.5 g myristic acid (0.3 mole) in 400 mL methylene chloride is added followed immediately by a solution of 190.5 g (0.3 mole) dioleyl 1-hydroxy-1,2-ethanedicarboxylate in 600 mL methylene chloride. The mixture is stirred with ice bath cooling for 30 minutes, then is allowed to warm to room temperature where it is maintained for an additional 90 hours. The solid dicyclohexylurea (DCU) is recovered by vacuum filtration, and the filtrate is evaporated. The residue obtained is dissolved in 800 mL diethyl ether, washed with 2000 mL 5% HCl and dried over anhydrous magnesium sulfate. Filtration and evaporation yield 206.5 g of crude product. This is dissolved in 100 g heptane and is subjected to flash chromatography on 150 g silica. Evaporation of the heptane eluate (1000 mL) affords 146.2 g of pale yellow oil. This is vacuum stripped in a steam deoderizer to give 114.5 g of purified oil. Proton nmr spectrum in chloroform-d: chemical shift in ppm (multiplicty, intensity, assignment): 5.47 (triplet J=6.4 Hz, 1 H, methine), 5.35 (multiplet, 6 H HC=CH), 4.15, 4.14 and 4.12 (overlapping triplets, 4 H, O-CH2), 2.87 (doublet J=6.4 Hz, 2 H, O-C-CH2-C=O), 2.371 and 2.365 (overlapping triplets, 2 H, O=C-CH2), 2.00, 1.63 and 1.30 (multiplets, 78 H, -CH2-) and 0.88 (triplet, 6 H, -CH3).
Analysis: Calc. for $C_{54}H_{100}O_6$, FW 845.38: C 76.72, H 11.92, O 11.36%; found: C 76.58, H 11.90, O (by difference) 11.52 %.

Alternate synthesis of dioleyl 1-myristoyloxy-1,2-ethanedicarboxylate.
Myristoyl chloride (266.8 g (1.08 mole) and 635.1 g (1.00 mole) dioleyl 1-hydroxy-1,2-ethanedicarboxylate are combined in a 2000 mL flask containing a magnetic stir bar and fitted with a thermometer and a vacuum connection leading to a trap containing 74 g (1.32 mole) KOH pellets. The reactants are warmed under 170 Torr

to 75 degrees at which point an exothermic reaction and gas evolution begin. The temperature is raised over 45 minutes to 115 degrees C and maintained for 7 hours. After cooling to ambient temperature, the crude product is passed through a falling film still (168 degrees, 0.8 Torr) to give 835.6 g (99% yield) of orange-red colored oil.

## EXAMPLE 6

This example describes the preparation of another fat mimetic of the invention, didodecyl 1-myristoyloxy-1,2-ethanedicarboxylate.

Didodecyl 1-hydroxy-1,2-ethanedicarboxylate.
Trichloroacetic acid (13.2 g, 0.08 mole), 302.2 g (2.25 mole) D,L-malic acid and 931.9 g (5.00 mole) dodecanol are combined in a 3000-mL flask containing a magnetic stirrer bar and fitted with a thermometer and a vacuum distillation head. The apparatus is placed under 170 Torr vacuum and warmed to 135 degrees C for 6.5 hours. Water distills from the reaction mixture under these conditions. The reaction mixture is cooled to 60 degrees C, and is passed twice through a falling film still (168 degrees C, 0.8 Torr) to give 935.6 g (88%) of the title composition as a white solid, mp 27-30 degrees C. Proton nmr spectrum in chloroform-d: chemical shift in ppm (multiplicity, intensity, assignment): 4.49 (doublet of doublets J=6.0, 4.5 Hz, 1 H, methine proton), 4.20 (overlapping triplets, 2H, O-CH2), 4.11 (triplet, 2 H, O-CH2), 2.86 (doublet of doublets J=16.5, 4.5 Hz, 1 H, half of O=C-C-CH2-C=O), 2.78 (doublet of doublets J=16.5, 6.0 Hz, 1 H, half of O=C-C-CH2-C=O), 1.64 (multiplet, 4 H, O-C-CH2), 1.29 (multiplet, 36 H, -CH2-) and 0.89 (triplet, 6 H, -CH3). The chemical shift for the hydroxyl proton is not readily apparent.

Didodecyl 1-myristoyloxy-1,2-ethanedicarboxylate.
Didodecyl 1-hydroxy-1,2-ethanedicarboxylate (935.6 g, 1.99 mole) and myristoyl chloride (512.3 g, 2.05 mole) are combined in a 2000-mL flask containing a magnetic stirrer bar and fitted with a thermometer and a vacuum line which leads to a trap containing 142.8 g (2.55 mole) KOH pellets. The apparatus is evacuated (170 Torr) and the reactants are warmed to 75 degrees C at which point gas evolution begins. The clear oil is warmed over 45 minutes to 115 degrees C and is maintained at this temperature for 6 hours. After cooling to 60 degrees C, the product is passed through a falling film still (168 degrees C, 0.8 Torr) to give a pale yellow liquid. Proton nmr in chloroform-d: 5.47 (triplet, 1 H, methine proton), 4.15 and 4.11 (overlapping triplets, 4 H, O-CH2), 2.88 (doublet, 2 H, O=C-C-CH2-C=O), 2.38 (overlapping triplets, 2 H, O=C-CH2-), 1.62 and 1.29 (multiplets, 62 H, -CH2-) and 0.89 (triplet, 9 H, -CH3).

## EXAMPLE 7

This example illustrates the preparation of a fat mimetic according to the invention having a mixture of fatty components on carboxylate ester functions.

Oleyl-hexadecyl 1-hydroxy-1,2-ethanedicarboxylate.
Trichloroacetic acid (6.6 g, 0.04 mole), 201.1 g (1.50 mole) malic acid, 283.7 g (1.17 mole) 1-hexadecanol and 538.4 g (2.01 mole) technical grade oleyl alcohol are combined in a 2000 mL flask containing a magnetic stirrer bar and fitted with a thermometer and a vacuum distillation head and receiver. The mixture is placed under vacuum (170 mm Hg) and is heated to 142 degrees C for 23 hours. A clear solution is obtained and water distills from the reacton mixture during this time. The crude product is transferred at 60 degrees C to a falling film still where in two passes (168 degrees C, 0.6 mm Hg) nearly all of the unreacted alcohol is removed. Upon cooling to ambient temperature the product oil becomes a solid. A proton nmr spectrum in chloroform-d shows the expected chemical shifts with intensities which are consistent with the mixed ester composition; the product contains an average of 1.04 unsaturated fatty alcohol groups per molecule, and is contaminated with 2.7% unreacted alcohol.

1:1 Oleyl-hexadecyl 1-myristoyloxy-1,2-ethane dicarboxylate
Myristoyl chloride (108.6 g, 0.44 mole) and 243.9 g (0.40 mole) oleyl-hexadecyl 1-hydroxy-1,2-ethanedicarboxylate are combined in a 1000-mL flask fitted with a thermometer and a vacuum stopcock. The mixture is placed under vacuum (175 torr) and is heated to 115 degrees C for 22 hours. Cooling to room temperature affords 354.8 g (quantitative yield) of an oil which solidifies on standing at ambient temperature. Proton nmr spectrum in chloroform-d: chemical shift in ppm (multiplicity, intensity, assignment):
5.48 (triplet, 1 H, methine proton), 5.35 (multiplet, 2 H, HC=CH), 4.16 and 4.11 (overlapping triplets, 4 H, O-CH2), 2.89 (doublet, 2 H, O2C-C-CH2-CO2), 2.38 (overlapping triplets, 2 H, myristoyl O=C-CH2), 2.02 (multiplet, 4 H, C=C-CH2), 1.63 (multiplet, 6 H, alcohol O-C-CH2 and myristoyl O=C-C-CH2), 1.31 (multiplet,

68 H, CH2) and 0.89 (triplet, 9 H, CH3). The spectrum is consistent with a composition containing 1:1 oleyl : hexadecyl alcohol esters.

## EXAMPLE 8

This example describes the preparation of oleyl 1,3-oleoyloxy-2-propanecarboxylate, a fat mimetic of the invention.

2,2-Bis(oleoyloxymethyl)propanoic acid.
Oleoyl chloride (96.3 g, 0.32 mole) is added with mechanical stirring to a solution of 13.4 g (0.099 mole) 2,2-bis(hydroxymethyl) propionate in 36 mL pyridine producing a precipitate of pyridinium hydrochloride. After stirring 18 hours at ambient temperature the reaction mixture is filtered through a bed of silica, and the filtrate is washed successively with 5 % HCl and water, and then dried over sodium sulfate. A 72.3 g portion of the intermediate anhydride product is combined with 18 g of silica gel, 200 mL 5 % HCl, and 100 mL diethyl ether, and the slurry is stirred for 24 hours. The organic layer is separated, and is passed through a falling film still (168 degrees C, 0.8 torr) to remove excess oleic acid and give the title compound.

2,2-Bis(oleoyloxymethyl)propanoyl chloride.
2,2-Bis(olleoyloxymethyl)propionic acid (39.7 g, 0.06 mole) and 20 mL (0.27 mole) thionyl chloride are combined and stirred at room temperature for 18 hours. Excess unreacted thionyl chloride is removed at the rotary evaporator affording the title compound as an oil. Proton nmr spectrum in chloroform-d: chemical shift in ppm (multiplicity, intensity, assignment): 5.35 (multiplet, 4 H, HC=CH), 4.29 (singlet, 4 H, O-CH2), 2.32 (triplet, 4 H, O=C-CH2), 2.01 (multiplet, 8 H, C=C-CH2), 1.61 (multiplet, 4 H, O=C-C-CH2), 1.39 (singlet, 3 H, propane CH3), 1.30 (multiplet, 40 H, CH2) and 0.89 (triplet, 3 H, CH3).

Oleyl 2,2-bis(oleoyloxymethyl)propanoate.
37.8 g (0.055 mole) of 2,2-bis(oleolyloxymethyl)propanoyl chloride is added dropwise with stirring to a solution of oleyl alcohol (16.1 g, 0.060 mole) in 7 mL of pyridine. After 24 hours the reaction mixture is washed successively with 5% HCl and water, then is filtered through a bed of silica gel to give the crude product. This is passed through a falling film still (168 degrees C, 0.8 torr) to give the final product as an oil. Proton nmr spectrum in chloroform-d: chemical shift in ppm (multiplicity, intensity, assignment): 5.35 (multiplet, 6 H, HC=CH), 4.22 (singlet, 4 H, backbone O-CH2), 4.11 (triplet, 2 H, oleyl alcohol O-CH2), 2.29 (triplet, 4 H, O=C-CH2), 2.01 (multiplet, 12 H, C=C-CH2), 1.61 (multiplet, 6 H, CH2), 1.31 (multiplet, 62 H, CH2), 1.23 (singlet, 3 H, propane CH3) and 0.89 (triplet, 9 H, CH3).

## EXAMPLE 9

This example describes the preparation of another fat mimetic of the invention, dioleyl 2-oleyloxyglutarate (i.e., dioleyl 1-oleoyloxy-1,3-propanedicarboxylate).

Dioleyl 2-ketoglutarate.
Trichloroacetic acid (2.1 g, 0.01 mole), 2-ketoglutaric acid (25.0 g, 0.17 mole) and oleyl alcohol (95.9 g, 0.36 mole) are combined in a 500-mL flask fitted with a distillation head, thermometer, and teflon coated stirrer bar. The system is evacuated to about 150 mm Hg and is heated at 130-140 degrees C for 20 hours. A brown oil is obtained. Proton nmr spectrum in chloroform-d: chemical shift in ppm (multiplicity, intensity, assignment): 5.35 (multiplet, 4 H, HC=CH), 4.25 (triplet, 2 H, O-CH2-), 4.05 (triplet, 2 H, O-CH2-), 3.15 (triplet, 2 H, O=C-CH2-), 2.65 (triplet, 2 H, -CH2-C=O), 2.02, 1.73, 1.62, 1.30 (multiplets, 56 H, C-CH2-C), and 0.88 (triplet, 6 H, -CH3).

Dioleyl 2-hydroxyglutarate.
Sodium borohydride (14.4 g, 0.38 mole) in 300 mL ice water and dioleyl 2-ketoglutarate (164.1 g, 0.25 mole) in 300 mL diethyl ether are combined and are stirred at room temperature for 22 hours in a 2000-mL flask fitted with a magnetic stirrer bar and a reflux condenser (exothermic reaction). The ether layer is separated, washed with 3 x 200 mL 5 % HCL, 3 x 200 mL distilled water, and is dried over anhydrous sodium sulfate. Filtration and concentration on a rotary evaporator affords 154.6 g of the title compound as a clear oil. This is further purified by passage through a falling film still (168 degrees C, 1.0 torr). Proton nmr spectrum in chloroform-d: 5.35 (multiplet, 4 H, HC=CH), 4.19 (overlapping triplet and multiplet, 3 H, O-CH2 and methine proton, respectively), 4.08 (triplet, 2 H, O-CH2), 2.92 (broad doublet, 1 H, OH), 2.48 (apparent octet, 2 H, O=C-CH2), 2.18 (multiplet, 1 H, one half of O=C-C-CH2-C-C=O), 2.02 (multiplet, 8 H, C=C-CH2), 1.97 (multiplet, 1 H, one half of O=C-C-CH2-C-C=O), 1.63 and 1.31 (multiplets, 48 H, -CH2-), and 0.89 (triplet, 6 H, -CH3).

Dioleyl 2-oleyloxyglutarate.

Dioleyl 2-hydroxyglutarate (20.0 g, 0.03 mole), oleic acid (8.8 g, 0.03 mole) and 4-dimethylaminopyridine (0.37 g, 0.003 mole) are dissolved in a minimum amount of dichloromethane and this solution is added to a solution of N,N′-dicyclohexylcarbodiimide (6.4 g, 0.03 mole) in dichloromethane contained in a 500-mL flask containing a magnetic stirrer bar. A total of 110 mL of solvent is employed and the mixture is stirred at ambient temperature overnight. The reaction mixture is suction filtered to remove excess dicyclohexylurea and the filtrate is evaporated. The residue produced is dissolved in 250 mL diethyl ether, washed with 3 x 200 mL 5 % HCl and 3 x 200 mL distilled water. After drying over sodium sulfate, the ether solution is filtered and evaporated to give 24.6 g (87% of theory) of the title composition as a clear orange oil. Flash chromatography of this material over silica (18:1 hexane-EtOAc) affords a clear yellow oil upon evaporation. Proton nmr spectrum in chloroform-d: 5.35 (multiplet, 6 H, HC=CH), 5.03 (doublet of doublets, 1 H, methine proton), 4.13 and 4.08 (overlapping triplets, 4 H, O-CH2), 2.48-2.12 (overlapping multiplets, 6 H, O=C-C-CH2-CH2-C=O and O=C-CH2), 2.02 (multiplet, 12 H, C=C-CH2), 1.63 and 1.31 (multiplets, 70 H, -CH2-) and 0.89 (triplet, 9 H, -CH3).

## EXAMPLE 10

This example describes the preparation of another fat mimetic of the invention, dioleyl 2-myristoyloxyglutarate (i.e., dioleyl 1-myristoyloxy-1,3-propanedicarboxylate).

Dioleyl 2-myristoyloxyglutarate.

By replacing oleic acid with myristic acid in the above procedure of Example 9, the title composition is obtained. Proton nmr spectrum in chloroform-d: 5.35 (multiplet, 4 H, HC=CH), 5.03 (doublet of doublets, 1 H, methine proton), 4.13 and 4.08 (overlapping triplets, 4 H, O-CH2), 2.48-2.12 (overlapping multiplets, 6 H, O=C-C-CH2-CH2-C=O and O=C-CH2), 2.02 (multiplet, 8 H, C=C-CH2), 1.63 and 1.31 (multiplets, 70 H, -CH2-) and 0.89 (triplet, 9 H, -CH3).

## EXAMPLE 11

This example describes the synthesis of dioleyl 1,3-bis(oleoyloxy)propane-2,2-dicarboxylate, another fat mimetic of the invention.

Dioleyl malonate.

Malonic acid (62.4 g, 0.60 mole), 65% oleyl alchol (329.4 g, 1.28 mole) and trichloroacetic acid (7.5 g, 0.045 mole) are combined in a 1000 mL flask containing a magnetic stirrer bar and fitted with a thermometer and a vacuum distillation head and trap. The apparatus is placed under vacuum (about 150 mm Hg) and heated by means of a Variac controlled heating mantle to 180 degrees C for 7 hours. The reactants become miscible near 135 degrees C and reaction is exothermic with loss of water. After cooling to ambient temperature, a quantitative yield of reddish brown oil is obtained. Excess alcohol is removed from the product by passage of the crude product through a falling film still at 168 degrees C and 0.8 mm Hg. The yield of recovered product is 85.7% of theory. Further purification by flash chromatography on silica using hexane as eluent provides the product as a pale yellow oil. Proton NMR in chloroform-d: chemical shift in ppm (multiplicity, intensity, assignment): 5.37 (multiplet, 3.25 H, HC=CH), 4.15 (triplet, 4 H, O-CH2-), 3.38 (singlet, 2 H, O2C-CH2-CO2), 2.03 (multiplet, 6.35 H, C=C-CH2-), 1.66 (apparent quintet, 4 H, O-CH2-CH2-), 1.32 (overlapping multiplets, 44 H, C-CH2-C) and 0.88 (triplet, 6 H, -CH3).

Dioleyl 1,3-dihydroxypropane-2,2-dicarboxylate.

Aqueous formaldehyde (41.8 mL of a 37% solution, 0.515 mole) and 2.088 g (0.020 mole) potassium bicarbonate are combined in a 1000 mL flask containing a magnetic stirrer bar and fitted with an addition funnel. Dioleyl malonate (150.0 g, 0.248 mole) is added dropwise over 15 minutes with stirring. After stirring at ambient temperature for an additional 20 hours, the reaction mixture is diluted with 100 mL of diethyl ether and is washed with 3 x 150 mL of aqueous NaCl solution to break up the emulsion. The ether solution is dried over anhydrous magnesium sulfate, filtered and evaporated to afford the title compound in a 63.2% yield. Proton NMR in chloroform-d: chemical shift in ppm (multiplicity, intensity, assignment): 5.37 (multiplet, 3.42 H, HC=CH), 4.80 (singlet, 0.5 H, impurity peak), 4.19 and 4.12 (overlapping triplet and singlet, respectively, 8 H, O-CH2-), 2.90 (broad singlet, 2.0 H, -OH), 2.02 (multiplet, 6.68 H, C=C-CH2-), 2.90 (broad singlet, 2.0 H, -OH), 2.02 (multiplet, 6.68 H, C=C-CH2-), 1.65 (multiplet, 4 H, O-CH2-CH2-), 1.33 (overlapping multiplets, 44 H, C-CH2-C) and 0.89 (triplet, 6 H, -CH3).

Dioleyl 1,3-bis(oleoyloxy)propane-2,2-dicarboxylate.

Technical grade oleoyl chloride (48.88 g, 0.162 mole) and dioleyl 1,3-dihydroxypropane-2,2-dicarboxylate (50.00 g, 0.075 mole) are combined in a 500 mL flask containing a magnetic stirrer bar and fitted with a distillation head and collection trap. The mixture is placed under vacuum (about 150 mm Hg) and is heated by means of a Variac controlled heating mantle to 110 degrees C. After 24 hours the reaction mixture is allowed to cool to room temperature and the crude product is passed through a falling film still (168 degrees C, 0.8 mm Hg) to remove unreacted acid chloride. The yield of tetra ester product is 85.62 g (92.1% of theory). Flash chromatography of this material on silica using hexane as eluent affords, on evaporation of the hexane solution, the product as a pale yellow oil. Proton NMR in chloroform-d: chemical shift in ppm (multiplicity, intensity, assignment): 5.37 (multiplet, 8 H, HC=CH), 4.58 (singlet, 4 H, O-CH2-), 4.16 (triplet, 4 H, O-CH2-CH2), 2.29 (triplet, 4 H, O=C-CH2-CH2), 2.02 (multiplet, 12 H, =C-CH2), 1.63 (multiplet, 4 H, O-CH2-CH2), 2.02 (multiplet, 12 H, =C-CH2), 1.63 (multiplet, 4 H, O-CH2-CH2), 1.32 (overlapping multiplets, 44 H, C-CH2-C) and 0.89 (triplet, 12 H, -CH3) as well as peaks for oleyl oleate impurity at 4.08 (triplet) and 2.29 (triplet) and an unknown impurity at 2.46 (triplet).

## EXAMPLE 12

This example details the preparation of another fat mimetic of the invention, didecyl 1-palmitoyloxy-1,2-ethanedicarboxylate.

Didecyl 1-hydroxy-1,2-ethanedicarboxylate.

Trichloroacetic acid (7.9 g, 0.049 mole), 506.5 g (3.2 mole) decyl alcohol and 201.1 g (1.5 mole) malic acid are combined in a 2000 mL flask containing a magnetic stirrer bar and fitted with a thermometer and a vacuum distillation head and receiver. After placing the appratus under vacuum (175 mm Hg) the slurry is heated to 110 degrees C at which point an exothermic reaction begins, water distills and the reaction mixture becomes homogeneous. The temperature of the solution is raised to 140 degrees C and is maintained there for 70 hours. After cooling to room temperature the crude product was passed through a falling film still (98 degrees C, 1.0 mm Hg) to remove unreacted alcohol. The yield of light orange oil is 590.3 g (95%). Proton nmr spectrum in chloroform-d: chemical shift in ppm (multiplicity, intensity, assignment): 4.49 (doublet of doublets J=6.0 and 4.7 Hz, 1 H, methine proton), 4.20, 4.19 and 4.10 (overlapping triplets, 4 H, O-CH2), 3.25 (very broad peak, 1 H, -OH), 2.85 (doublet of doublets J=16.4 and 4.7 Hz, 1 H, one half of O=C-C-CH2-C=O), 2.79 (doublet of doublets J=16.4 and 6.0 Hz, 1 H, one half of O=C-C-CH2-C=O), 1.63 and 1.30 (multiplet, 32 H, -CH2-) and 0.89 (triplet, 6 H, -CH3).

Didecyl 1-palmitoyloxy-1,2-ethanedicarboxylate.

Didecyl 1-hydroxy-1,2-ethanedicarboxylate (289.96 g, 0.70 mole) and palmitoyl chloride (202.04 g, 0.735 mole) are combined in a 1000 mL flask fitted with a thermometer, vacuum adapter, and magnetic stirrer bar. The apparatus is evacuated (175 torr) and warmed to 85 degrees C. A reaction is initiated, the temperature rises to 113 degrees C and gas (HCl) is evolved. After 7 hours at 115 degrees C, the reaction mixture is cooled to ambient temperature. Proton nmr spectrum in chloroform-d: 5.48 (triplet, 1 H, methine proton), 4.15 (overlapping triplets, 2 H, O-CH2), 4.11 (triplet, 2 H, O-CH2), 2.88 (doublet, 2 H, O=C-C-CH2-C=O), 2.38 (overlapping triplets, 2H, O=C-CH2), 1.62 and 1.29 (multiplets, 58 H, -CH2-) and 0.89 (triplet, 9 H, -CH3).

## EXAMPLE 13

This example illustrates how the novel fat mimetics of this invention are screened for caloric availability by a carefully controlled animal feeding study.

In order to make an *in-vivo* assessment of caloric availability of synthetic fat mimetics, it is necessary to establish an experimental relationship between total calories ingested and animal body weight gain. This is done by monitoring the body weight gain associated with consumption of a nutritionally-balanced diet containing varying concentrations of a reference substance such as corn oil which has a known caloric availability. Correlations between total calories ingested and body weight gain are excellent (r = 0.99).

Caloric availability of an unknown substance is evaluated by substituting a specific weight of the unknown substance for the reference substance and observing the body weight gain. The gain in body weight is equated to a total number of calories using the correlation previously established for the reference data. The estimated number of calories ingested are divided by the weight of unknown substance to give the apparent calories per gram for the unknown substance.

The test animals are male Sprague-Dawley rats. The test duration is 14 days. The dietary requirements are established by observing the actual feed consumption of animals provided with unlimited feed. All diets are prepared to contain 50% of the established dietary requirement plus any supplements of reference or unknown substances. In all tests so designed, the test animals are maintained in good health.

Using the test protocols set out above, the fat mimetic prepared in Example 2 (dioleyl 2-myristoyloxy-1,3-propanedicarboxylate) is determined by animal feeding studies to be 1.6 Kcal/gram (approximately 18% of the caloric density of a fully digestible fat).

## EXAMPLE 14

This example shows the results of caloric availability screening using the test protocols set out in Example 13, and the fat mimetic prepared in Example 5. The caloric availability of dioleyl 1-myristoyloxy-1,2-ethanedicarboxylate as determined by animal feeding studies is 0.4 Kcal/gram (approximately 4% of the caloric density of a fully digestible fat).

## EXAMPLE 15

This example shows the results of caloric availability screening using the test protocols set out in Example 13, and the fat mimetic prepared in Example 6. The caloric availability of didodecyl 1-myristoyloxy-1,2-ethanedicarboxylate as determined by animal feeding studies is 2.7 Kcal/gram (approximately 30% of the caloric density of a fully digestible fat).

## EXAMPLE 16

This example shows the results of caloric availability screening using the test protocols set out in Example 13, and the fat mimetic prepared in Example 12. The caloric availability of didecyl 1-palmitoyloxy-1,2-ethanedicarboxylate as determined by animal feeding studies is 3.7 Kcal/gram (approximately 41% of the caloric density of a fully digestible fat).

## EXAMPLE 17

By essentially the same procedure as detailed in Examples 1 and 2, dimethyl 1,3-acetonedicarboxylate is allowed to react with two molar equivalents of equal amounts of oleyl alcohol and palmityl alcohol. The product is subsequently reduced with sodium borohydride in an ether-water emulsion and the product from this process is isolated and permitted to react with one molar equivalent of a 2:1:1 (mole ratio) mixture of myristoyl, stearoyl, and butyryl chlorides to afford a fat mimetic composition with properties emulating those of natural butterfat.

## EXAMPLE 18

Filled Cream. About 18 Kg of a fat mimetic (mp 32 to 35 degrees C) of Example 17 is homogenized with 82 Kg of skim milk in a conventional dairy homogenizer to afford a "filled cream" composition.

## EXAMPLE 19

Ice Cream. The "filled cream" composition of Example 18 (68 parts) is combined with 15 parts condensed skim milk, 15 parts sugar, 0.5 parts gelatin, 1.0 part flavor, and 0.25 parts color to produce an ice cream mix which is processed in the normal manner to yield a modified ice cream product.

## EXAMPLE 20

Filled Milk. About 100 parts of the filled cream composition prepared in Example 18 is combined with about 620 parts of skim milk to prepare a "filled milk" composition.

EXAMPLE 21

Cheese Products. The filled milk product obtained in Example 20 is treated like natural milk in the normal cheese making process (as is practiced, for example in the production of cheddar or swiss cheese). Preferably 10% butter oil is added to the fat mimetic portion of the filled milk product before it is employed in this process to enhance the proper flavor development of the cheese products.

EXAMPLE 22

Butter cream icing is prepared by blending:

| Ingredient | g. |
|---|---|
| Sugar | 227.0 |
| Fat mimetic of Example 2 | 70.8 |
| Water | 28.4 |
| Non-Fat Dry Milk | 14.0 |
| Emulsifier (used with di-alkyl glycerol ether blend only) | 1.4 |
| Salt | 1.0 |
| Vanilla | 1.0 |

All of the ingredients are creamed in a mixer at medium speed.

EXAMPLE 23

Vanilla Wafers. Twenty-five parts of a (plastic) fat mimetic are blended with 100 parts flour, 72 parts granulated sugar, 5 parts high fructose corn syrup, 1 part non-fat dry milk, 1 part salt, 1/10 part ammonium bicarbonate, 1 part dried egg yolk, 1/10 part sodium bicarbonate, and 55 parts water. The dough so formed is rolled, wire cut to 1/4 inch thickness, and baked by the usual process to give a vanilla wafer cookie.

EXAMPLE 24

Coconut Oil Mimetic. Didodecyl propane-2-ol-1,3-dicarboxylate (10 parts) prepared in accordance with the procedure outlined in Example 1 is allowed to react with a mixture of 1.4 parts palmitoyl chloride, 1.4 parts oleoyl chloride, 1 part capryloyl chloride, and 1 part decanoyl chloride at reduced pressure and 115 degrees C for 22 hours to give a fat mimetic whose properties emulate natural coconut oil.

EXAMPLE 25

Sprayed Crackers. A dough prepared from 100 parts flour, 5 parts sugar, 1.5 parts malt, 7.5 parts of the fat mimetic prepared in Example 24, 1 part salt, 0.9 parts sodium bicarbonate, 2.5 parts non-fat dry milk, 2.5 parts high fructose corn syrup, 0.75 parts mono calcium phosphate, and 28 parts water is sheeted, stamped, and baked to produce a cracker product.

The above description is for the purpose of teaching the person of ordinary skill in the art how to practice the present invention, and it is not intended to detail all those obvious modifications and variations of it which will

become apparent to the skilled worker upon reading the description. It is intended, however, that all such obvious modifications and variations be included within the scope of the present invention.

## Claims

1. A compound of the following formula, suitable for use as a fat replacement in edible materials:

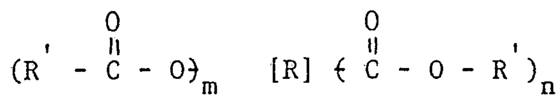

wherein R is an organic radical;
R′ is an aliphatic, ester or ether group having from 1 to 30 carbon atoms, the various R′ groups being the same or different; and
m and n are integers of at least 1, and the sum of m and n is at least 2.

2. A compound according to claim 1 wherein R contains 20 carbon atoms or less.
3. A compound according to claim 1 wherein the sum of m + n is within the range of from 3 to 25.
4. A compound according to claim 3 wherein the sum of m + n is 12 or less.
5. A compound according to claim 3 wherein the ratio of m to n is within the range of from 1:10 to 3:1.
6. A compound according to claim 5 wherein the ratio of m to n is within the range of from 1:8 to 1:1.
7. A compound of the following formula:

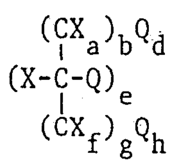

where:
C is a carbon atom;
X is H, OH, substituted or unsubstituted or lower aliphatic, the various X groups being the same or different;
Q is
$-\overset{O}{\overset{\|}{C}}-O-R'$ (carboxylate),
$-CH_2-\overset{O}{\overset{\|}{C}}-O-R'$ (methylcarboxylate),
$-O-\overset{O}{\overset{\|}{C}}-R'$ (carboxy), or
$-CH_2-O-\overset{O}{\overset{\|}{C}}-R'$ (methylcarboxy) radicals,
subject to the proviso that each molecule contain at least one carboxy or methylcarboxy and at least one carboxylate or methyl carboxylate radical;
R′ is substituted or unsubstituted organic group defined by the following formula

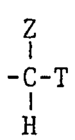

the various R′ groups being the same or different;
T is hydrogen or a substituted or unsubstituted aliphatic group;
Z is a bridging bond to carbon, hydrogen, or a residue of an alcohol, a glycol ester of the formula

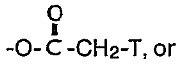, or
an ether;
with the proviso that there is only one bridging bonding valence per R′ group;
and where:
a = 0 to 3;
b = 0 to 4;
d = 1 or 2;
e = 0 to 5;
f = 0 to 3;
g = 0 to 4;
h = 1 or 2.

8. A compound according to claim 7 wherein:
a = 0 to 2;
b = 0 to 1;
d = 1 or 2;
e = 1 to 2;
f = 0 to 2;
g = 0 to 1; and
h = 1 or 2.

9. A compound according to claim 7 wherein at least 2 to 5 Q radicals include R′ groups comprising alkyl, alkenyl, alkyldienyl, alkyltrienyl, or alkynyl radicals having at least 5 carbons.

10. A compound according to claim 8 wherein the ratio of carboxy groups to carboxylate groups is less than 1:1.

11. A compound according to claim 7 having the structure:

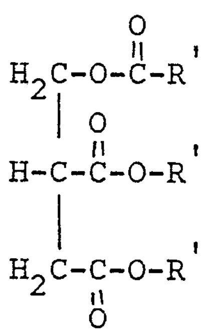

wherein R′ is defined as in claim 7.

12. A compound according to claim 7 having the structure:

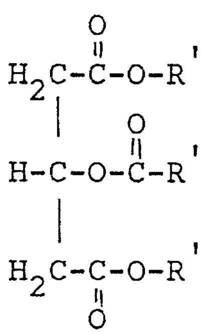

wherein R′ is defined as in claim 7.

13. A compound according to claim 7 having the structure:

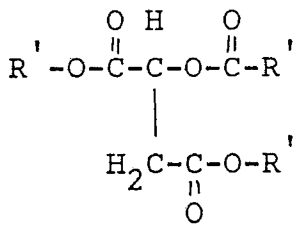

wherein R′ is defined as in claim 7.

14. The compounds: didecyl stearoyloxy-methanedicarboxylate;
didecyl 2-stearoyloxy-1,1-ethanedicarboxylate;
1-decyl-2-stearyl 1-octanoyloxyethanedicarboxylate;
1-stearyl-2,2-didodecyl 1-hexanoyloxyethanetricarboxylate;
dioleyl 2-myristoyloxy-1,3-propanedicarboxylate;
dioleyl 3-heptadecanoyloxy-1,2-propandicarboxylate;
dipalmityl 4-oleoyloxy-1,3-butanedicarboxylate;
dimyristyl 2-palmitoyloxy-1,4-butanedicarboxylate;
1-dodecyl-2-stearyl 4-myristoyloxy-1,2-butanedicarboxylate;
trioleyl 4,5-distearoyloxy-1,2,3-pentanetricarboxylate;
tristearyl 5-octanoyloxy-4-methyl-4-hydroxy-1,2,3-pentanetricarboxylate;
tetrastearyl 3-oleoyloxy-1,2,4,5-pentanetetracarboxylate;
tetraoleyl 5-octanoyloxy-1,2,3,4-pentanetetracarboxylate;
tetrastearyl 2-oleoyloxy-1,3,4,5-pentanetetracarboxylate;
didecyl 2-(2,2-dimethylpropanoyloxy)-1,3-propanedicarboxylate;
dioleyl 2,4-di(methylpalmitoyloxy)-3-(2,2-dimethylpropanoyloxy) -1,5-dimyristoyloxypentane-2,4-dicarboxylate;
didecyl 2-(2,2-dimethylpropanoyloxy)-1,3-propanedicarboxylate;
dioleyl 2-oleoyloxy-1,3-propanedicarboxylate;
dioleyl 1-myristoyloxy-1,3-propanedicarboxylate;
dioleyl 1-oleoyloxy-1,3-propanedicarboxylate;
trioleyl 1,3,5-pentanetricarboxylate;
dioleyl 2-myristoyloxy-1,2-ethanedicarboxylate;
dioleyl 2-oleoyloxy-1,2-ethanedicarboxylate;
didecyl 2-palmitoyloxy-1,2-ethanedicarboxylate;
myristyl hexadecyloyloxy oleoyloxy ethanecarboxylate;
diolodecyl 2-myristoyloxy-1,2-ethanedicarboxylate;
dioleyl 1,3-di(oleoyloxy)-2,2-propanedicarboxylate; or
oleyl 1,3-oleoyloxy-2-propanecarboxylate.

15. An edible composition comprising at least one edible material and a composition as defined in any of claims 1 to 14.

16. A margarine substitute comprising an aqueous phase and a fatty phase, wherein the fatty phase comprises a compound as defined in any of claims 1 to 14.

17. A fatty product intended for frying foods comprising a compound as defined in any of claims 1 to 14.

18. A pharmaceutical composition comprising a compound as defined in any of claims 1 to 14.

19. A reduced calorie fat or oil mimetic compound comprising an edible, partially digestible fat or oil with an organic backbone R, wherein said backbone is substituted with at least one substituent of the formula selected from the group consisting of

$-\overset{O}{\overset{\|}{C}}-OR'$,

$-CH_2-\overset{O}{\overset{\|}{C}}OR'$, and at least one substituent of the formula selected from the group consisting of

$-O\overset{O}{\overset{\|}{C}}R'$ and

$-CH_2O\overset{O}{\overset{\|}{C}}R'$,

wherein R′ is a substituted or unsubstituted aliphatic group.

20. In edible food compositions which include a fat or oil as a component ingredient thereof, the improvement in said edible food comprising a reduced calorie fat or oil component wherein at least a portion of said fat or oil is comprised of the fat or oil mimetic compound of claim 19.

21. A reduced calorie fat or oil containing edible composition comprised of the fat or oil mimetic

compound of claim 19.

22. The fat or oil edible composition of claim 19 which comprises margarine.

23. A compound according to claim 19 wherein R′ is an unsubstituted aliphatic group.

24. A compound according to claim 19 wherein R is an aliphatic or carbocyclic backbone group.

25. A compound according to claim 19 wherein R is an all-carbon backbone, and each carbon of R is substituted.

26. A compound according to any of claims 19 to 25 wherein R′ is a saturated or unsaturated olefinic ester or ether group.

27. A compound according to any of claims 19 to 26 wherein the positioning of the R′ groups along the R group backbone produces a pair of $-CO_2R'$ and $-O_2CR'$ groups, a pair of $-CH_2-CO_2R'$ and $-CO_2R'$ groups, or a pair of $-CH_2-O_2CR'$ and $-O_2CR'$ groups.

28. A compound according to claim 19 wherein the R′ groups are selected to provide a perceptible fat-like character.

29. A compound according to claim 28 wherein R is an all-carbon backbone.

30. A fat mimetic composition comprising at least a portion of a fatty acid-polyol ester compound wherein the carboxyl group of at least one of the ester moieties has been reversed so that the carbon of said carboxyl group is bonded to a carbon of the polyol chain.

31. A composition according to claim 30 wherein the polyol contains at least one methylene group.

32. A composition according to claim 30 that is edible.

European Patent Office

# EUROPEAN SEARCH REPORT

Application number: EP 88307566.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE - A - 1 815 706 (EMERY INDUSTRIES) * Claims 1-9 * | 1-6 | C 07 C 69/675<br>A 61 K 47/00<br>A 61 K 31/23<br>A 23 D 3/00<br>A 23 D 5/00<br>A 23 L 1/308 |
| X | DE - A1 - 2 456 631 (C.H. BOEHRINGER) * Claims * | 1-6 | |
| X | EP - A2 - 0 184 259 (THE PROCTER & GAMBLE) * Claims * | 1,15-32 | |
| D,X | & US-A-4 582 927 | | |
| A | FR - A - 2 254 318 (THE PROCTER & GAMBLE) * Claims * | 1,19,30 | **TECHNICAL FIELDS SEARCHED (Int. Cl.4)** |
| A | EP - A2 - 0 034 858 (THE PROCTER & GAMBLE) * Claims * | 1 | C 07 C 69/00<br>A 61 K 47/00<br>A 61 K 31/00<br>A 23 D<br>A 23 L |
| A | FR - A - 2 329 291 (THE PROCTER & GAMBLE) * Claims * | 1,19,30 | |
| A | GB - A - 952 849 (N.V. KONINKLIJKE STEARINE) * Claims * | 1,15-19,30-32 | |

The present search report has been drawn up for all claims

| Place of search | Date of completion of the search | Examiner |
|---|---|---|
| VIENNA | 18-11-1988 | HOFBAUER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

Application number



EP 88307566.5

| Category | DOCUMENTS CONSIDERED TO BE RELEVANT<br>Citation of document with indication, where appropriate, of relevant passages | Relevant to claim | CLASSIFICATION OF THE APPLICATION (Int. Cl.4) |
|---|---|---|---|
| P,A | EP - A2 - 0 236 288 (THE PROCTER & GAMBLE)<br>* Abstract *<br>-- | 1,19, 30 | |
| A | THE AMERICAN JOURNAL OF CLINICAL NUTRITION, vol. 29, 1976<br>R. W. FALLAT et al. "Short term study of sucrose polyester a nonabsorbable fat-like material as a dietary agent for lowering plasma cholesterol" pages 1204-1215<br>* Page 1204; page 1205, column 1 *<br>-- | 19,30 | |
| D,A | US - A - 3 579 548 (D.D. WHYTE)<br>* Examples *<br>-- | 15-32 | TECHNICAL FIELDS SEARCHED (Int. Cl.4) |
| D,A | US - A - 3 600 186 (F.M. MATTSON et al.)<br>* Columns 5,6; claims *<br>-- | 15-32 | |
| D,A | US - A - 2 962 419 (A. MINICH)<br>* Totality *<br>-- | 15-32 | |
| D,A | US - A - 4 508 746 (D.J. HAMM)<br>* Columns 5-12 *<br>-- | 15-32 | |

The present search report has been drawn up for all claims

| Place of search | Date of completion of the search | Examiner |
|---|---|---|
| VIENNA | 18-11-1988 | HOFBAUER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

European Patent Office

# EUROPEAN SEARCH REPORT

Application number
-3-

EP 88307566.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,A | EP - A2 - 0 233 856 (THE PROCTER & GAMBLE)<br>* Claims *<br>---- | 15-32 | |

TECHNICAL FIELDS SEARCHED (Int. Cl.4)

The present search report has been drawn up for all claims

| Place of search | Date of completion of the search | Examiner |
|---|---|---|
| VIENNA | 18-11-1988 | HOFBAUER |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document